Europäisches Patentamt

European Patent Office

Office européen des brevets

(11) Veröffentlichungsnummer: **0 155 552**
**B1**

(12) **EUROPÄISCHE PATENTSCHRIFT**

(45) Veröffentlichungstag der Patentschrift: **16.08.90**

(51) Int. Cl.⁵: **B 29 C 67/12, B 29 C 47/00**

(21) Anmeldenummer: **85102129.5**

(22) Anmeldetag: **27.02.85**

(54) **Verfahren zur Herstellung von Werkstoffen mit gegen Scherkräfte empfindlichen Einlagen.**

(30) Priorität: **07.03.84 DE 3408224**

(43) Veröffentlichungstag der Anmeldung:
**25.09.85 Patentblatt 85/39**

(45) Bekanntmachung des Hinweises auf die
Patenterteilung:
**16.08.90 Patentblatt 90/33**

(84) Benannte Vertragsstaaten:
**CH DE FR GB IT LI NL SE**

(56) Entgegenhaltungen:
**EP-A-0 056 702    US-A-3 316 139**
**EP-A-0 150 931    US-A-3 788 937**
**DE-A-2 262 752    US-A-4 009 043**
**GB-A- 791 567    US-A-4 015 039**
**GB-A- 824 449    US-A-4 044 188**
**LU-A- 58 086    US-A-4 646 618**

(73) Patentinhaber: **BAYER AG**
**D-5090 Leverkusen 1 Bayerwerk (DE)**

(72) Erfinder: **Bier, Peter, Dr.**
**Bodelschwinghstrasse 18**
**D-4150 Krefeld (DE)**
Erfinder: **Löhr, Karl-Dieter, Dr.**
**Zum Wald 25**
**D-4234 Alphen (DE)**
Erfinder: **Titze, Dieter, Dipl.-Ing.**
**Schützenstrasse 9**
**D-7971 Aitrach (DE)**

EP 0 155 552 B1

**Beschreibung**

Die Erfindung betrifft ein Verfahren zur Herstellung von Werkstoffen mit gegen Scherkräfte empfindlichen Einlagen, wobei die Einlagen einem mindestens plastischen Kunststoff in einer Schneckenmaschine zugesetzt werden.

Die Verstärkung von Polymeren mit Glasfasern ist bekannt. Gegenstände aus glasfaserverstärkten Polymeren werden verwendet, wenn große Festigkeit bei geringem Gewicht erforderlich ist.

Glasfaserverstärkte polymerisierbare Harzformmassen wie ungesättigte Polyester und Epoxidharze werden vorwiegend in Pressen verformt. Hierbei bleiben die Glasfasern in ihrer Länge erhalten.

Die Glasfasern liegen hier nicht einzeln vor, sondern als Glasfaserbündel aus ca. 20 bis 600 Filamenten. Zur Herstellung von Formteilen müssen solche Harzformmassen bei höheren Temperaturen gegebenenfalls unter Druck auspolymerisiert werden; dies dauert lange. Einmal hergestellte Formkörper können nicht wieder umgeformt werden und folglich auch nicht als Rohstoff wieder eingesetzt werden.

Weiter ist bekannt, glasfaserverstärkte Thermoplaste durch Spritzgießen zu verarbeiten.

Der Nachteil dieses Verfahrens besteht darin, daß infolge der hohen Scherkräfte die Glasfaser auf durchschnittliche Längen von 200—500 µm zerkleinert wird. Durch solche Einlagen wird nur eine geringe Verbesserung der Festigkeit erzielt.

Es gibt auch durch Glasfasermatten verstärkte Thermoplaste, die erhitzt und dann ohne weitere äußere Wärmezufuhr mit Methoden der Metallumformtechnik, wie Tiefziehen, Streckformen, Stanzen und Prägen verformt werden. Solche Produkte und Verfahren zu ihrer Verformung sind z.B. beschrieben in: DD—A 20 549, DE—A 2 312 816, GB—A 791 567, US—A 3 850 723, DE—A 1 204 097, US—A 2 662 044, DE—A 3 112 496, US—A 3 920 879 und US—A 4 291 084.

Herkömmliches, glasmattenverstärktes thermoplastisches Halbzeug hat bestimmte, mehr oder weniger ausgeprägte Nachteile, wie Oberflächenstörungen, unzureichende Homogenität und unvollständige Schmelzetränkung der Glasmatten. Hierzu sei im einzelnen gesagt:

Erstens ist die Zusammensetzung der glasmattenverstärkten Platte nur makroskopisch homogen. Mikroskopisch besteht sie aus einer netzförmigen Glasmatte mit einer separaten Thermoplastphase, die eigene Bereiche innerhalb der Gesamtstruktur ausbilden. Zweitens tritt beim Preßvorgang, insbesondere an unregelmäßigen Ecken, Kanten, Rippen, Noppen, Einsätzen und dergleichen, oft die bereits erwähnte Trennung von Harzmatrix und Verstärkungsfasern auf.

Auch ist im Vergleich zum Spritzgußmaterial die Oberflächenqualität durch die Glasfaseransammlung der aus ca. 100 bis 600 Einzelfilamenten bestehenden Glasfaserstränge, aus denen die Glasfasermatten bestehen, geringer. Die örtlichen Glasfaseranhäufungen äußern sich in Wanddickenschwankungen im Fertigteil. Auch kommt es beim Preßvorgang, insbesondere beim Fließpressen, an Umlenkungen leicht zu einer Separation der Glasfasermatten und der Thermoplastschmelze, was zu verstärkten Inhomogenitäten bis hin zu austretenden Glasbündeln aus der Oberfläche führen kann. Die Oberflächenstörungen äußern sich in Rauheit, Welligkeit, Riefen etc.

Verbesserte Oberflächen lassen sich mit kurzglasverstärktem Halbzeug erzielen, das zur Handhabung während des Aufheiz- und Preßprozesses eine geringe Menge (10 Gew.-%) eines mattenförmigen Trägers enthält. Solche Produkte sowie Verfahren zu ihrer Herstellung sind z.B. beschrieben in US—A 4 240 857, US—A 4 238 266, US—A 4 207 373, US—A 4 098 943, US—A 4 044 188, US—A 4 015 039 und US—A 3 765 998.

Die bessere Oberfläche dieser Produkte wird durch die Reduzierung des Glasmattenanteils, der nur noch ca. 1/3 ausmacht, zugunsten der kurzen homogenen dispergierten Einzelfasern erzielt. Entsprechend nehmen jedoch die hohen mechanischen Eigenschaften, die man durch Langfaserverstärkung im Vergleich zu kurzen Fasern erzielt, ab.

Aus GB—A 824 449 ist ein Verfahren zur Herstellung von Rohren bekannt, wobei Granulat einer rohrformenden Mischung aus einem thermoplastischen Polymer aus ethylenisch ungesättigten Verbindungen und aus 5 bis 25 Gew.-% darin gleichmäßig verteilten Kurzglasfasern mit Längen bis 12,2 mm einem Extrusionsschritt unterworfen wird, wobei diese Mischung in der gewünschten rohrformenden Stärke auf einem nicht-rotierenden, aber linear vorgeschobenen Kern extrudiert wird, und wobei das Extrudat abgekühlt wird, um es zu verfestigen und wobei schließlich das derart hergestellte Rohr vom Kern, auf welchem es geformt wurde, getrennt wird.

Aus EP—A 056 702 ist ein Verfahren zum Herstellen von faserverstärkten Formteilen bekannt, wobei eine Mischung aus einem härtbaren Fluid als Träger für Fasern von wenigstens 5 mm Länge durch eine Düse extrudiert wird, wobei die Relaxation der Fasern am Extrudat eine offene faserige Struktur mit ungeordneten Fasern verursacht. Dabei wird das poröse Extrudat, noch während sich das Trägermaterial in flüssigem Zustand befindet, zu einem Formteil gepreßt.

Aufgabe der Erfindung ist es, ein Verfahren zur Herstellung eines verstärkten lunkerfreien Werkstoffes zu finden, bei dem dieser Werkstoff eine über das Volumen gleichmäßig verteilte, gleich hohe Festigkeit besitzt, glatte Oberflächen auch nach einer Weiterverarbeitung im erweichten Zustand beibehält, nur geringe Neigung zum Kleben im Bereich der Verarbeitungstemperatur zeigt, beim Fließverformen auch bei dünnen Wandelementen nicht die Struktur ändert und mit einfachen Maßnahmen auf spezielle physikalische Anforderungen, wie Abschirmung, geringes Gewicht, Schlagfestigkeit, Steifigkeit, Laminierung, einzustellen ist.

Das neue Verfahren ist dadurch gekennzeichnet, daß ab dem Zugeben der Einlagen in den Kunststoff alle nachfolgenden Schneckenabschnitte bei hohem Füllgrad ($\varepsilon = 1$) mit einem kinematischen Betriebsparameter $\curlywedge$, der das Verhältnis der bei einem vorherrschenden Betriebszustand durch einen gefüllten Schneckenabschnitt geförderten Mengen q zu maximal durch die Schnecke zu fördernden Mengen $q_{max}$ beim Differenzdruck $\Delta p = 0$ angibt, $> \curlywedge_{max}$ gefahren werden.

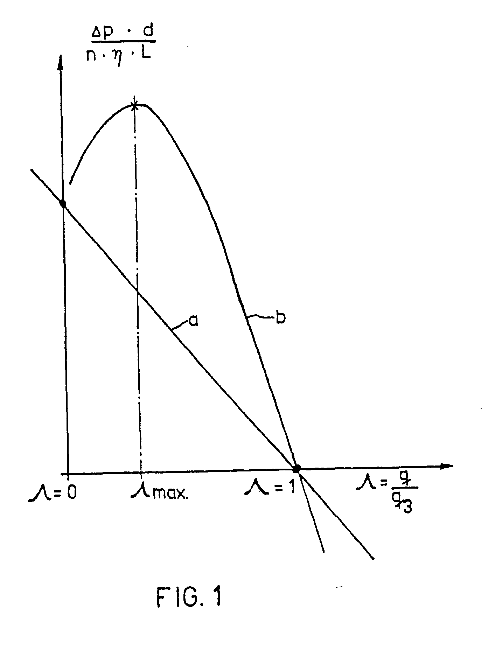

Der kinematische Betriebsparameter $\curlywedge$ einer gefüllten ($\varepsilon = 1$) Schnecke fällt bei plastifizierten oder geschmolzenen hochviskosen Massen oder gleichen Stoffen, die mit Füll- oder Verstärkungsstoffen angereichert sind, welche untereinander nicht verschachtelt oder verbunden sind und nur noch unwesentlich zerkleinert werden können, im isothermen Fall kontinuierlich von $\curlywedge = 0$ nach $\curlywedge = 1$ ab, wie dem Diagramm Fig. 1 zu entnehmen ist.

Es war daher für den Fachman völlig überraschend, daß Schmelzen mit beispielsweise untereinander verschachtelten oder verbundenen Einlagen bei der Förderung in Druckzonen von Schneckenprofilen Kennlinien ausbilden, die oberhalb der Kennlinie des reinen Trägermaterials verläuft und welche ein ausgeprägtes Maximum bei $\curlywedge_{max}$ besitzt und daß eine Zerstörung während der Verarbeitung weitgehend vermieden werden kann, wenn der Betriebsparameter $\curlywedge$ gleich oder größer $\curlywedge_{max}$ ist. Durch die schonende Behandlung der Einlagen ist es möglich, eine hohe Homogenität durch Mischen zu erzielen, die wesentlich die Eigenschaften, insbesondere die Rheologie bei der Verarbeitung, bestimmt, denn ein so hergestellter Verbund aus Fasergerüst und Kunststoffmatrix zeigt auch im wiedererwärmten Zustand keine Neigung zu Separationen bzw. zum Zusammenfallen der Strukturen. Die hohe Festigkeit des Werkstoffes bleibt so erhalten.

Eine detaillierte Beschreibung des kinematischen Betriebsparameters ist beschrieben in I. Pawolowski "Die Ähnlichkeitstheorie in der physikalisch-technischen Forschung" Springer-Verlag Berlin 1971.

Gemäß einer besonderen Durchführung des Verfahrens werden die Schneckenabschnitte nach der Zugabe von Einlagen aus Hohlkugeln und/oder Einzelfasern in einen thermoplastischen Kunststoff mit einem kinematischen Betriebsparameter $\curlywedge \geq 1/3$ gefahren.

Durch die schonende Einarbeitung ist es möglich, Glasfasern und Hohlkugeln ohne Zerkleinerung einzuarbeiten, die bei den beiden bekannten Verfahren wegen ihrer Sprödigkeit durch starke Scherung zerstört werden, wodurch ein hoher Homogenitätsgrad erzielt werden kann, der wiederum für die Weiterverarbeitung und die Festigkeit ausschlaggebend ist.

In einer weiteren Durchführung des Verfahrens werden die Schneckenabschnitte nach der Zugabe der Einlagen aus Metallplättchen und/oder Einzelfasern in einen thermoplastischen Kunststoff mit einem kinematischen Betriebsparameter $\curlywedge \geq 1/3$ gefahren.

Trotz der schwierigen Einarbeitung von Metallplättchen kann insbesondere durch Zusatz von Glasfasern ein homogener, lunkerfreier Werkstoff hergestellt werden, der sich auch einwandfrei weiterverarbeitung läßt.

Nach einer anderen Durchführungsform des Verfahrens übernimmt am Ende der Schnecke ein Förderaggregat die Förderung.

Ein zusätzliches Förderaggregat am Ende der Homogenisierschnecke übernimmt dem Pumpvorgang.

In einer möglichen Durchführung des Verfahrens wird der Masse nach der Düse mindestens eine Verstärkungslage zugeführt.

Durch zwei parallele, übereinanderliegende Breitschlitzdüsen können Bahnen erzeugt werden, zwischen denen Schnittglasfasern oder unidirektionale Langfasern eingelegt werden, bevor beide Bahnen durch eine Walze zusammengedrückt werden.

Die Homogenität der Faserverteilung im langfaserverstärkten Thermoplasthalbzeug wurde durch Kontaktmikroradiographische Aufnahmen in Verbindung mit einem automatischen Bildanalysensystem ermittelt. Als Beispiel dienten 3 mm dicke glasfaserhaltige Thermoplastplatten (30 Gew.-%), die zum einen die Glasfasern nach dem neuen Verfahren als homogen verteilte Einzelfasern (Länge: 24 mm) enthielten, zum anderen als Vergleich entsprechende, nicht vollständig aufgeschlossene "chopped strands" sowie ein Muster mit 30 Gew.-% Glasmatten. Die Kontaktmikroradiographischen Aufnahmen wurden mit einer W-Röntgenröhre durchgeführt und die Negative auf optimalen Kontrast belichtet und entwickelt. Die Verarbeitung der Negative erfolgte einheitlich auf Spezialpapier. Die Positive der Mikroradiographie, abgezogen auf Papier gleicher Gradation, wurden nach gleichmäßiger Ausleuchtung mittels einer TV-Kamera vom Typ Chalnikon der Fa. Siemens dem vollautomatischen Bildanalysensystem IBAS I und II der Firmen Zeiss/Kontron zugeführt. Die erfaßten TV-Bilder (ca. $6 \times 6$ cm) wurden als Grauwertbilder mit einer Matrix aus $512 \times 512$ Bildpunkten mit jeweils 256 Grauwertstufen abgespeichert und eine Gesamt-Grauwertverteilung angefertigt.

Bei ungleichmäßiger Glasfaserverteilung in der Probe liegen die Grauwerte unsymmetrisch um den häufigsten Wert verteilt. Die Abweichung von einer Gauß-Verteilung ist umso ausgeprägter, je ungleichmäßiger die Glasfasern in der Probe verteilt sind. Je nachdem, ob in dem betrachteten Flächenelement die Glasfasern gebündelt, einzeln oder gar nicht vorhanden sind, variieren die Grauwerte pro Bildpunkt (entsprechend einer Bildfläche von $0,1 \times 0,1$ mm) sehr stark. Bei einer statistisch gleichmäßigen Faserverteilung sind die Konzentrationsschwankungen normal verteilt. Entsprechend unterliegen die Grauwerte einer Normalverteilung. Je schmaler die Gaußkurve ist (charakterisiert durch die Standardabweichung), desto gleichmäßiger sind die Fasern verteilt (Konzentrationsschwankungen). Als quantitatives Maß für die Güte der Faserverteilung wurde der Homogenitätsgrad M nach Julius W. Hiby:

"Definition und Messung der Mischgüte" in Chem.-Ing. Techn. *51* (1979) Nr. 7 S. 705, verwendet, der aus der Häufigkeitskurve der ermittelten Grauwertverteilung nach Gleichung 1 errechnet wurde.

$$M = 1 - \bar{\delta\delta} \qquad (G1.1)$$
$$\bar{\delta\delta} = \bar{\delta}/\bar{a}$$

M = Homogenitätsgrad
$\bar{\delta\delta}$ = relative Standardabweichung
$\bar{\delta}$ = Standardabweichung
$\bar{a}$ = Mittelwert der Häufigkeitskurve

Danach besitzen die erfindungsgemäßen Halbzeug M-Werte > 0,9 Produkte mit nicht vollständig aufgeschlossenen Glasfaserbündeln (chopped strands) M-Werte zwischen 0,8 und 0,87, glasmattenhaltige Produkte M-Werte in der Größenordnung 0,5 bis 0,7.

Maximale Homogenität liegt bei M = 1 vor.

Als Kunststoffe für die Werkstoffe (Halbzeuge) können alle Reaktivharze und thermoplastisch bearbeitbaren Polymere verwendet werden, wobei der Begriff "Polymere" auch Mischungen aus zwei oder mehr Polymeren einschließt. Geeignet sind Harzmassen auf Basis von Alkenylaromaten wie Polystyrol, Styrolcopolymere. Mischungen und Pfropfcopolymere aus Styrol und Kautschuk.

Für die Erfindung können auch Vinylchlorid (PVC) oder Vinyliden-PVDC-Copolymere (Saran) und Polymerisate verwendet werden. Weiterhin sind geeignete thermoplastische Harzmassen in Sinne der Erfindung: Polyolefine wie z.B. Polyethylen, Polypropylen, Polymethylpenten und Copolymere davon, Polyamide, wie z.B. Polyamid-6,6; Polyamid-6, I; Polyamid-6, T, etc.

Polycarbonate, wie z.B. Bisphenol-A-Polycarbonat, Copolycarbonat aus Bisphenol A, Terephthalsäure, Isophthalsäure und Kohlensäure etc. lineare aromatische Polyester wie z.B. Polybutylenterephthalat, Polyethylenterephthalat, Cyclohexandimethyllolterephthalat, Copolyester aus Terephthalsäure, Isophthalsäure und Bisphenol A etc.

Celluloseester wie z.B. Celluloseacetat, -propionat, -nitrat etc. sowie halogenierte Olefine, Polyacetale, Polyphenylensulfid, Polyphenylenoxid und Polysulfone PPO/HIPS; PC/Polyester; PC/ABS; Kautschukmodifizierte Polyamide oder kautschukmodifizierte Polyester etc.

Besonders bevorzugt sind Polyester, Polyamide, Polycarbonat, Polyphenylensulfid und modifizierte Polyethylenterephthalate, letztere sind in der DE—A 2 653 120 bzw. DE—A 2 706 128 beschrieben.

Die Polymere können übliche Hilfsstoffe enthalten wie Stabilisierungsmittel gegen Hitze und Licht, Plastifiziermittel, Füllstoffe, Pigmente, Verarbeitungshilfsmittel, Streckmittel, Mittel zur Erhöhung der Schlagfestigkeit und Mittel zur Verbesserung der Flammfestigkeit.

Geeignete Verstärkungsfasern sind mineralisch, organisch und/oder metallisch. Bevorzugte mineralische Verstärkungsfasern sind Glasfasern, normalerweise in Form von Endlossträngen (Rovings) oder geschnitten (chopped strands).

Die Glasfasern können in üblicher Weise geschlichtet sein. Schlichten sind gewöhnlich Zubereitungen, die ein oder mehrere Schmiermittel, Emulgatoren, Kopplungsmittel, Mittel zum Regulieren des pH-Wertes, filmbildende synthetische Bindemittel, Antistatikmittel und/oder Benetzungsmittel enthalten. Bevorzugte Kopplungsmittel sind dabei organische Siliziumverbindungen wie Silylperoxidverbindungen, Alkoxysilane, Aminoalkoxysilane, Vinylalkoxysilane und Aminoalkylalkoxysilane sowie Epoxyalkylalkoxysilane.

Bevorzugte organische Verstärkungsfasern sind Kohlenstoff-Fasern und Aramidfasern. Eine Beschreibung dieser Fasern und ihrer Anwendung zur Kunststoffverstärkung findet sich in "Kohlenstoff- und aramidfaserverstärkte Kunststoffe, VDI-Verlag GmbH, Düsseldorf 1977".

Bevorzugte metallische Fasern sind Stahl-, Aluminium- und Kupferfasern.

Die Kohlenstoff- und Metallfasern ergeben aufgrund der Netzwerkstruktur der erfindungsgemäßen Produkte bereits in sehr niedrigen Mengen gute elektromagnetische Abschirmung. Für derartige Anwendungen können auch metallisierte Glasfasern analog verwendet werden.

Die Länge der Fasern sollte mehr als 3 mm betragen, wobei insbesondere große Längen wie 12, 24, 40 mm bevorzugt werden. Der Durchmesser kann zwischen 5 und 100 µm, vorzugsweise zwischen 10 und 24 µm variieren, wobei die Menge zwischen 5 und 80 Gew.-% liegt. Bei den Schnittglas- und den unidirektionalen Glasbündeleinlagen liegen die Mengen zwischen 4—14 Gew.-%, vorzugsweise 8—12 Gew.-%. Der Durchmesser der Einzelfaser beträgt 5—50 µm, vorzugsweise 10—24 µm bei einem Einzeltex von 10—800, vorzugsweise 20—50. Dabei sind die Glasfaserbündel der Einlagen höchstens zu 50%, vorzugsweise nicht mehr als 20%, durch die langfaserhaltige Thermoplastmatrix aufgeschlossen.

Geeignete Hohlkugeln sind z.B. Glas- oder Keramikhohlkugeln der Firmen: 3 M, Emerson & Cunning Inc. oder PQ Corp., Hohlkugeln aus Phenolharzen der Fa. Union Carbide oder aus Epoxyharzen der Fa. Emerson & Cunning Inc. oder solche aus anderen Duromerharzen wie z.B. Polyharnstoff. Bevorzugte Hohlkugeln sind Hohlglaskugeln.

Hohlkugel mit einem Durchmesser zwischen 0,005—5 mm, insbesondere 0,02—0,2 mm bei einer Wandstärke zwischen 0,2—5 µm können bis 60 Gew.-% zugesetzt werden.

Geeignete Metallplättchen sind z.B. Aluminium-Flakes Typ K—102 HE der Fa. Transmet (1 mm × 1,4 mm × 0,025 mm).

Die Flakes sollten eine Fläche zwischen 0,25—100 mm² bei einer Dicke von 0,01—1 mm besitzen und können in einer Menge von 10—60 Gew.-% zugesetzt werden.

Zur Erläuterung ist eine Zeichnung beigefügt. Es zeigen
Fig. 1 ein Diagramm über Betriebsparameter
Fig. 2 die Zonenaufteilung einer Schnecke
Fig. 3 die Perspektive von einem Halbzeug

In Fig. 1 ist nach Pawlowski der Betriebszustand einer Schnecke, die vollständig gefüllt (Füllgrad $\varepsilon = 1$) ist, durch einen Betriebsparameter $\curlywedge$ in Abhängigkeit vom Gegendruck $\Delta p$ in Form eines Diagrammes dargestellt. Der Betriebsparameter $\curlywedge$ gibt das Verhältnis des realen Durchsatzes q zum maximal möglichen Schleppströmungsanteil beim Differenzdruck $\Delta p = 0$ an.

Während für reine Schmelzen oder feststoffgefüllte Schmelzen, in welchen die Feststoffeinlagen untereinander nur einen losen Zusammenhang bilden und nur eine geringfügige Zerkleinerung erfahren, und der Wert linear von $\curlywedge = 0$ nach $\curlywedge = 1$ stetig abfällt (Linie a), besitzt die Kennlinie bei Schmelzen mit Einlagen, die eine starke Zerkleinerung erfahren, zwischen $\curlywedge = 0$ und $\curlywedge = 1$ ein Maximum (Kurve b). Dieses Maximum $\curlywedge_{max} = q/q_{max}$ liegt für Glas, Hohlkugel und Metallplättchen laut Untersuchungen etwa bei 1/3, wobei eine Zerstörung dieser Einlagen nur dann nicht stattfindet, wenn die Schnecke mit einem Betriebsparameter $\curlywedge$ größer als $\curlywedge_{max}$ gefahren wird. Ein Schneckenabschnitt mit einem kinematischen Betriebsparameter $\curlywedge$ größer 1 arbeitet als überfahrener Betriebsbereich, bei dem die Schnecke in Förderrichtung von hinten überflutet wird. Für den Zustand der Teilfüllung in einem Schneckenabschnitt gilt $q/q_{max}$ <1 bei einem Differenzdruck von $\Delta p = 0$ zwischen Ein- und Austrittsquerschnitt des Schneckenabschnittes. Damit herrscht auch bei Teilfüllung Schleppströmung mit geringer Belastung des plastischen Materials vor.

Es bedeuten

$\Delta p$ = Druckdifferenz in einem gefüllten Schneckenabschnitt
d = Zylinderdurchmesser
l = Länge des gefüllten Schneckenabschnittes
$\eta$ = Viskosität der viskosen Phase
n = Drehzahl
q = Fördermenge

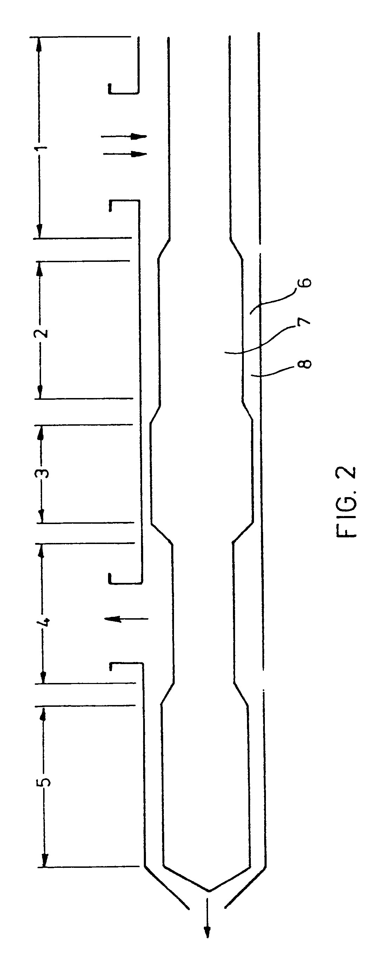

In Fig. 2 ist eine Schneckenmaschine dargestellt, bei der in einem Gehäuse 6 von 100 mm Durchmesser eine Schnecke 7 mit folgenden technischen Daten angeordnet ist:

| Schnecken-abschnitt | Funktion | Gangtiefe [mm] | Steigung [µm] | rel.Länge |
|---|---|---|---|---|
| 1 | Dosierung | 15 | | 2D |
| 2 | Homogeni-sieren | 7,5 | | 3D |
| 3 | Absperr-bereich | 2,5 | 1xD | 2D |
| 4 | Entgasung | 15 | | 3D |
| 5 | Pumpbereich | 5 | | 4D |

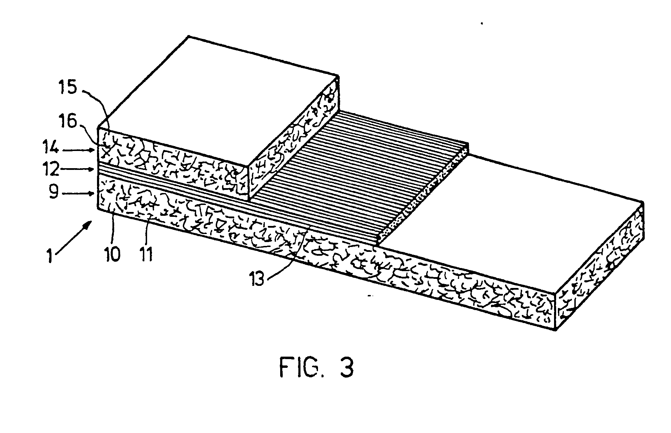

Fig. 3 zeigt eine Perspektive eines Halbzeugfabrikates, bei dem auf einer unteren Schicht 9 aus Kunststoffmatrix 10 und Gerüst aus Einzelfasern 11 eine Schicht 12 aus undirektionalen Glasfasern 13 (Schnittglas) angeordnet ist, und auf der eine weitere Schicht aus Kunststoffmatrix 15 und Gerüst aus Einzelfasern 16 aufgebaut ist.

| Einsatzprodukt | Modifizierter PETP | PBT | PA-6 | PC | PC/ABS | PA-6 |
|---|---|---|---|---|---|---|
| | Glasfasern | Glasfasern | Glasfasern | Glasfasern | Glasfasern | Glasfasern |
| Gew.-% | 30 | 30 | 30 | 20 | 20 | 60 |
| l [mm] | 48 | 44 | 45 | 38 | 37 | 38 |
| Durchsatz kg/h | 100 | 100 | 100 | 100 | 100 | 100 |
| Dichte kg/ltr. | 1,4 | 1,4 | 1,45 | 1,25 | 1,2 | 1,95 |
| Drehzahl min$^{-1}$ | 25 | 25 | 30 | 35 | 35 | 20 |
| Betriebsparameter | | | | | | |
| $\wedge$ 2 | 0.47 | 0.47 | 0.38 | 0.38 | 0.39 | 0.42 |
| $\wedge$ 3 | 1.59 | 1.59 | 1.27 | 1.26 | 1.32 | 1.42 |
| $\wedge$ 5 | 0.68 | 0.68 | 0.55 | 0.54 | 0.57 | 1.41 |
| Zone 1 u. 4, Teilfüllung | <0.7 | <0.7 | <0.7 | <0.7 | <0.7 | <0.7 |
| Gegendruck [bar] | 3 | 5 | 5 | 8 | 8 | 12 |
| Ergebnis | | | | | | |
| Mischungsgrad | >0,9 | >0,9 | >0,9 | >0,9 | >0,9 | >0,9 |
| Biegemodul GPa | 9,0 | 8,0 | 8,4 | 6,4 | 5,7 | 20,1 |
| Biegefestigkeit MPa | 253 | 225 | 253 | 189 | 146 | 405 |
| Schlagzähigkeit kg/m$^2$ | 48 | 51 | 65 | 62 | 35 | 67 |

EP 0 155 552 B1

| Beispiel | | | | | | |
|---|---|---|---|---|---|---|
| Einsatzprodukt | PAG | PAG | PC/ABS | PC/ABS | PPS | |
| Einlagen 1 | Glasfasern | - | Glasfasern | - | Glasfasern | |
| Gew.-% | 10 | - | 10 | - | 80 | |
| 1 mm | 48 | - | 40 | - | 36 | |
| Einlagen 2 | Hohlkugeln | Hohlkugeln | Alu-Flakes | Alu-Flakes | Luft | |
| Gew.-% | 20 | 30 | 30 | 30 | - | |
| | | | | | | |
| Durchsatz kg/h | 100 | 100 | 100 | 100 | 70 | |
| Dichte kg/ltr. | 0.96 | 0.82 | 1,3 | 1.4 | 0.5 | |
| Drehzahl min$^{-1}$ | 30 | 30 | 30 | 25 | 30 | |
| Betriebsparameter | | | | | | |
| ∧ 2 | 0.55 | 0.55 | 0.42 | 0.47 | 0.4 | |
| ∧ 3 | 1.85 | 1.85 | 1.42 | 1.59 | 1.3 | b) das 6 mm |
| ∧ 5 | 0.79 | 0.79 | 0.61 | 0.68 | 0.9 | dicke Band |
| Zone 1 u. 4, Teilfüllung, $\epsilon$ | ‹0.7 | ‹0.7 | ‹0.7 | ‹0.6 | ‹0.7 | (300$^{0}$C) ist frei trans- |
| Gegendruck bar | 3 | 3 | 6 | 5 | 8 | portierbar |
| | | | | | | |
| Spez. Gewicht | 0.96 | 0.82 | 1,3 | - | ~0.5 | a) das 4mm |
| Schirmwirkung: | | | | | | dicke Schmel- |
| Frequenz: 0,5 - 960 MHZ | - | - | 60-65 db | 60-65 db | - | zefell (28) konnte ohne |
| Bemerkung | a) | - | a) | - | b) | Schwierigkei- ten abge- trennt und weiterverar- beitet werden |

EP 0 155 552 B1

| Beispiel | | | | |
|---|---|---|---|---|
| Einsatzprodukt | PAG | PAG | PP | a) Einlage 2 wurde |
| Einlagen 1 | Glasfasern | Glasfasern | Glasfasern | zwischen zwei |
| Gew.-% | 20 | 20 | 30 | Schmelzebahnen |
| l mm | 18 | 18 | 15 | mit Einlage 1 |
| Einlagen 2[a] | Schnittglas* | Glasfaserstränge | Schnittglas | zugeführt |
| Gew.-% | 10 | 10 | 10 | |
| l mm | 24 | | 24 | |

| | | | |
|---|---|---|---|
| Durchsatz kg/h | 100 | 100 | 100 |
| Dichte kg/ltr.1 | 0.96 | 0.96 | 1.45 |
| Drehzahl $min^{-1}$ | 30 | 30 | 30 |
| Betriebsparameter | | | |
| $\wedge$ 2 | 0.55 | 0.55 | 0.38 |
| $\wedge$ 3 | 1.85 | 1.85 | 1.25 |
| $\wedge$ 5 | 0.75 | 0.79 | 0.54 |
| | ⟨0.7 | ⟨0.7 | ⟨0.7 |
| Gegendruck (bar) | 3 | 3 | 5 |

| | | | |
|---|---|---|---|
| Ergebnis | | | |
| Biegemodul GPa | 7,0 | 8,6 | 5,7 |
| Biegefestig- | | | |
| keit MPa | 240 | 183 | 138 |
| Schlagzähig- | | | |
| keit $KJ/m^2$ | 70 | 110 | 50 |
| Kerbschlagzähig- | | | |
| keit [$KJ/m^2$] | 43 | 108 | 42 |

EP 0 155 552 B1

**Patentansprüche**

1. Verfahren zur Herstellung von Werkstoffen mit gegen Scherkräfte empfindlichen Einlagen, wobei die Einlagen einem mindestens plastischen Kunststoff in einer Schneckenmaschine zugesetzt werden, dadurch gekennzeichnet, daß ab dem Zugeben der Einlagen in den Kunststoff alle nachfolgenden Schneckenabschnitte bei hohem Füllgrad ($\varepsilon = 1$) mit einem kinematischen Betriebsparameter $\lambda$, der das Verhältnis der bei einem vorherrschenden Betriebszustand durch einen gefüllten Schneckenabschnitt geförderten Menge q zur maximal durch die Schnecke zu fördernden Mengen $q_{max}$ beim Gegendruck $\Delta p = 0$ angibt, gleich oder größer $\lambda_{max}$ gefahren werden.

2. Verfahren nach Anspruch 1, dadurch gekennzeichnet, daß die Schneckenabschnitte nach der Zugabe von Einlagen aus Hohlkugeln und/oder Einzelfasern in einen thermoplastischen Kunststoff mit einem kinematischen Betriebsparameter $\lambda \geq 1/3$ gefahren werden.

3. Verfahren nach Anspruch 1, dadurch gekennzeichnet, daß die Schneckenabschnitte nach der Zugabe von Einlagen aus Metallplättchen und/oder Einzelfasern in einen thermoplastischen Kunststoff mit einem kinematischen Betriebsparameter $\lambda \geq 1/3$ gefahren werden.

4. Verfahren nach einem der Ansprüche 1, 2 oder 3, dadurch gekennzeichnet, daß am Ende der Schnecke ein Förderaggregat die Förderung übernimmt.

5. Verfahren nach einem der Ansprüche 1 bis 4, dadurch gekennzeichnet, daß der Masse nach der Düse mindestens eine Verstärkungseinlage zugeführt wird.

**Revendications**

1. Procédé pour produire des matériaux comportant des insertions sensibles à des forces de cisaillement, les insertions étant ajoutées à une matière synthétique au moins plastique, dans une machine à vis, procédé caractérisé en ce que, depuis l'addition des insertions dans la matière synthétique, tous les tronçons successifs de la vis sont utilisés avec un degré élevé de remplissage ($\varepsilon = 1$) avec un paramètre de fonctionnement cinématique $\lambda$ (qui indique le rapport d'une quantité q transportée, dans un état prédominant de fonctionnement, par un tronçon de vis empli et quantité maximale pouvant être transportée par la vis, $q_{max}$, pour une contre-pression $\Delta p = 0$), égal ou supérieur à $\lambda_{max}$.

2. Procédé selon la revendication 1, caractérisé en ce qu'après l'addition d'insertions constituées par des billes creuses et/ou des fibres individuelles dans une matière synthétique thermoplastique, on fait fonctionner les tronçons ou zones de la vis avec un paramètre de fonctionnement cinématique $\lambda = \geq 1/3$.

3. Procédé selon la revendication 1, caractérisé en ce que, après l'addition d'insertions constituées par des paillettes de métal et/ou des fibres individuelles dans une matière synthétique thermoplastique, on fait fonctionner les tronçons ou zones de la vis avec un paramètre de fonctionnement cinématique $\lambda \geq 1/3$.

4. Procédé selon l'une des revendications 1, 2 ou 3, caractérisé en ce qu'à l'extrémité de la vis, un appareillage de transport se charge du transport.

5. Procédé selon l'une des revendications 1 à 4, caractérisé en ce qu'après la buse, la matière est acheminée vers au moins une installation de renforcement.

**Claims**

1. A process for the production of materials with shear-sensitive inserts, the inserts being introduced into one at least plastic plastics material in a screw extruder, characterized in that, at introduction of the inserts into the plastics material, all the following screw sections are operated at a high filling level ($\varepsilon = 1$) with a kinematic parameter $\lambda$, which indicates the ratio of the quantity q transported through a filled screw section in a prevailing operational state to the maximum quantities $q_{max}$ transported through the screw at the counter-pressure $\Delta p = 0$, of equal to or greater than $\lambda_{max}$.

2. A process as claimed in claim 1, characterized in that, after the introduction of inserts of hollow beads and/or individual fibres into a thermoplastic, the screw sections are operated with a kinematic operating parameter $\lambda \geq 1/3$.

3. A process as claimed in claim 1, characterized in that, after the introduction of inserts of metal platelets and/or individual fibres into a thermoplastic, the screw sections are operated with a kinematic operating parameter $\lambda \geq 1/3$.

4. A process as claimed in claim 1, 2 or 3, characterized in that, at the end of the screw, a conveyor takes over the transport function.

5. A process as claimed in any of claims 1 to 4, characterized in that, at least one reinforcing insert is introduced into the melt after the die.

$$\frac{\Delta p \cdot d}{n \cdot \eta \cdot L}$$

a

b

$\Lambda = 0$  $\Lambda_{max.}$  $\Lambda = 1$  $\Lambda = \dfrac{q}{q_3}$

FIG. 1

FIG. 2

EP 0 155 552 B1

15

16

14 →

12 →

9 →

1

10  11

13

FIG. 3